# EUROPÄISCHE PATENTSCHRIFT

(11) **EP 1 997 718 B1**
(45) Veröffentlichungstag und Bekanntmachung des Hinweises auf die Patenterteilung: **28.04.2010**
(21) Anmeldenummer: 08009873.4
(22) Anmeldetag: 30.05.2008
(51) Int. Cl.: B62D 25/04, B62D 29/04

(54) **Faserverbundwerkstoffprofil und Kraftfahrzeugscheibenrahmen**
Fibre composite profile and motor vehicle windscreen frame
Profilé en matériau composite renforcé par des fibres et cadre de vitres de véhicule automobile

(30) Priorität: 01.06.2007 DE 102007025633
(43) Veröffentlichungstag der Anmeldung: 03.12.2008
(73) Patentinhaber: AUDI AG, 85045 Ingolstadt (DE)
(72) Erfinder: Schneidewind, Thomas, 89312 Günzburg (DE); Gerbrand, Jürgen, 71737 Kirchberg (DE); Durst, Karl, 91790 Thalmannsfeld (DE)
(74) Vertreter: Patzelt, Heike Anna Maria

(56) Entgegenhaltungen:
- WO-A-2004/098820
- DE-A1- 19 802 702
- JP-A- 2006 282 099

## Beschreibung

Die Erfindung betrifft ein Faserverbundwerkstoffprofil und einen zugehörigen Scheibenrahmen für ein Kraftfahrzeug.

Aus dem Stand der Technik ist der Einsatz von Stahl als Werkstoff im Karosseriebau insbesondere für Kraftfahrzeugscheibenrahmen bekannt. Um eine Zunahme des Fahrzeuggewichts in Folge höherer Sicherheitsanforderungen bezüglich der Steifigkeit der Fahrgastzellen von Kraftfahrzeugen und ihre Deformationseigenschaften verhindern zu können, werden in bekannter Weise Leichtbauwerkstoffe, wie zum Beispiel Aluminium, als Werkstoffe für Kraftfahrzeugscheibenrahmen verwendet. Sowohl Stahl als auch Aluminium ermöglichen als Werkstoffe für den Kraftfahrzeugscheibenrahmen eine hohe Bruchdehnung ohne Versagen der Struktur, so dass insbesondere ein seitlicher Fahrzeugscheibenrahmen Kräfte aufnehmen und auf untere Karoseriestrukturen weiterleiten kann, die bei einem Unfall auf das Fahrzeugdach wirken können. Dies erhöht die Widerstandsfähigkeit.des Fahrzeugdaches gegen eine Eindrückung, beispielsweise bei einem unfallbedingten Überschlag des Fahrzeugs.

In der Offenlegungsschrift DE 198 02 702 A1 wird beispielsweise eine Säule für den Aufbau eines Kraftfahrzeuges beschrieben. Die beschriebene Säule wird aus einem einstückigen Hohlprofil gebildet, das zumindest in dem Bereich, der einem Fahrzeuginsassen zugewandt ist, in Bezug auf quer zur Längserstreckung der Säule auftretende Belastungen eine so niedrige örtliche Steifigkeit aufweist, dass sich bei einem Kopfaufprall eines Fahrzeuginsassen das Hohlprofil lokal verformt und somit eine Reduzierung des Verletzungsrisikos des Fahrzeuginsassen erreicht wird.

Zudem ist der Einsatz von Faserverbundwerkstoffen als Leichtbauwerkstoffe aus dem Stand der Technik bekannt, die beispielsweise mit einem so genannten RTM-Verfahren (RTM: Resin Transfer Moulding bzw. Harz-Injektionsverfahren) hergestellt werden. Die Verstärkungsfasern können beispielsweise als Gewebe, Gewirke, Vliese, Gitter Matten usw. ausgeführt sein, die beispielsweise aus Glas-, Kunststoff-, Natur- und/oder Kohlefasern hergestellt sind. Für Sandwich-Konstruktionen können Kernwerkstoffe wie Polyurethanschaum, PVC-Schaum, Balsaholz usw. verwendet werden. Neben den verschiedenen Verstärkungsfaserwerkstoffen und Sandwichwerkstoffen können beim RTM-Verfahren auch unterschiedliche Harzsysteme, wie z.B. Polyester-, Venylester-, Epoxid- oder Phenol-Harze, verwendet werden. Das RTM-Verfahren ermöglicht insbesondere die Herstellung von Teilen mit einer komplexen Geometrie.

In der Gebrauchsmusterschrift DE 299 24 726 U1 wird ein Verbundbauteil für Fahrzeugkarosserien beschrieben. Das beschriebene Verbundbauteil definiert abschnittsweise die Außenfläche des Fahrzeugs und ist insbesondere als großflächiges Verbundbauteil in Form eines Fahrzeugdachs, einer Tür, einer Klappe oder eines Deckels ausgeführt. Das beschriebene Verbundbauteil umfasst eine vor dem Schäumen separat tiefgezogene Außenhaut und eine auf der Innenseite der Außenhaut aufgeschäumte Kunststoffschicht. Die tiefgezogene Außenhaut ist an den Rändern rahmenlos ausgebildet und mit einer umlaufenden Aufkantung versehen. Zudem ist über den gesamten Flächenbereich der Außenhaut eine an sich nicht steife Armierung aus ungeordneten Fasern, insbesondere Glasfasern, vorgesehen, mit denen der Kunststoff beladen ist, wobei die ungeordneten Fasern den Elastizitätsmodul der geschäumten Kunststoffschicht erhöhen. Die Armierung umfasst beispielsweise nichteigensteife bzw. biegeschlaffe Gewebe, Gewirke, Vliese, Gitter Matten usw., die beispielsweise aus Glas-, Kunststoff- und/oder Kohlefasern hergestellt sind.

Bei einem möglichen Einsatz von Faserverbundwerkstoffen als Werkstoffe für Kraftfahrzeugscheibenrahmen, die insbesondere mit Kohlenstofffasern verstärkt sind, ergibt sich das Problem, dass aufgrund der geringeren Bruchdehnung dieser Werkstoffe bei der Aufnahme und Weiterleitung der bei einem Unfall auf das Fahrzeugdach wirkenden Kräfte ein Versagen der Struktur früher als gefordert auftreten kann.

Aufgabe der Erfindung ist es, ein Faserverbundwerkstoffprofil und einen zugehörigen Kraftfahrzeugscheibenrahmen anzugeben, die ein geringes Gewicht und eine ausreichende Bruchdehnung aufweisen und kostengünstig hergestellt werden können.

Die Erfindung löst diese Aufgabe durch Bereitstellung eines Faserverbundwerkstoffprofils mit den Merkmalen der Patentanspruchs 1, und durch einen Scheibenrahmen für ein Kraftfahrzeug mit den Merkmalen der Patentanspruchs 5.

Vorteilhafte Ausführungsformen und Weiterbildungen der Erfindung sind in den abhängigen Ansprüchen angegeben.

Erfindungsgemäß ist ein Faserverbundwerkstoffprofil an einer Seite konkav ausgebildet. Zudem ist mindestens ein im Querschnitt zu dem konkaven Bereich benachbarter Bereich des Faserverbundwerkstoffprofils schubweich ausgebildet, so dass das Faserverbundwerkstoffprofil bei einer Krafteinwirkung in diesem mindestens einen benachbarten Bereich einen Riss ausbildet, der das Faserverbundwerkstoffprofil zur Erhöhung der Bruchdehnung in zwei Halbschalen aufteilt. Durch die Aufteilung in zwei Halbschalen stützt eine innere Halbschale die äußere Halbschale ab, wodurch das maximale Kraftniveaus erhöht wird, welches das Faserverbundwerkstoffprofil aufnehmen und ohne Versagen der Struktur weiterleiten kann. So wird durch die Aufteilung in zwei Halbschalten der maximale senkrechte Faserabstand verringert und dadurch eine größere mögliche Gesamtdurchsenkung des Faserverbundwerkstoffprofil erzielt. Durch die vorliegende Erfindung können Faserverbundwerkstoffprofile so dimensioniert werden, dass in vorteilhafter Weise eine ausreichende Bruchdehnung erreicht werden kann. Das Faserverbundwerkstoffprofil kann beispielsweise als geschlossenes Hohlprofil ausgeführt werden.

Durch den Einsatz des erfindungsgemäßen Faserverbundwerkstoffprofils als Scheibenrahmen für ein Kraftfahrzeug können in vorteilhafter Weise ein geringeres Fahrzeuggewicht und dadurch ein tieferer Fahrzeugschwerpunkt erzielt werden, wodurch das Fahrverhalten bei gleich bleibendem hohen Insassenschutz verbessert werden kann. Zudem ermöglicht die, Verwendung des erfindungsgemäßen Faserverbundwerkstoffprofils als Scheibenrahmen eine dünnere Ausführung der A-Säule, wodurch der Sichtwinkel in vorteilhafter Weise verbessert wird. Außerdem ergeben sich durch die Verwendung des erfindungsgemäßen Kunststoffrohres geringerer Herstellungskosten und eine größere Designfreiheit.

In dem mindestens einen schubweichen Bereich weisen die Fasern beispielsweise einen Orientierungswinkel von ungefähr 0° auf.

In Ausgestaltung des erfindungsgemäßen Kunststoffrohrs sind zwei zu dem konkaven Bereich benachbarte schubweiche Bereiche konvex ausgebildet.

Ein erfindungsgemäßer Scheibenrahmen für ein Kraftfahrzeug umfasst mindestens ein Faserverbundwerkstoffprofil, der beispielsweise als seitlicher Schreibenrahmen ausgeführt ist, wobei die auf den seitlichen Scheibenrahmen wirkende Kraft beispielsweise durch einen Überschlag des Fahrzeugs bei einem Unfall verursacht werden kann. Das mindestens eine Faserverbundwerkstoffprofil kann beispielsweise so ausgerichtet bzw. angeordnet werden, dass es eine maximale Bruchdehnung gegen eine zu erwartende Krafteinwirkung bei einem Unfall aufweist.

Vorteilhafte Ausführungsformen der Erfindung sind in den Zeichnungen dargestellt und werden nachfolgend beschrieben.

Dabei zeigen:
- Fig. 1: eine schematische Perspektivdarstellung eines erfindungsgemäßen seitlichen Scheibenrahmens für ein Kraftfahrzeug, und
- Fig. 2: eine schematische Perspektivdarstellung eines erfindungsgemäßen Faserverbundwerkstoffprofils für den Scheibenrahmen aus Fig. 1.

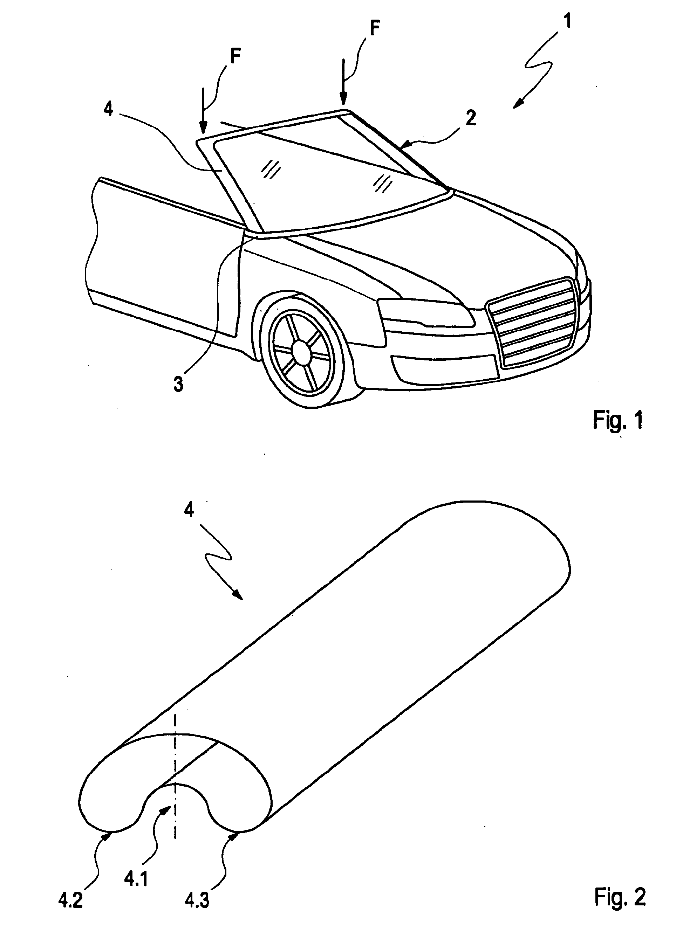

Wie aus Fig. 1 ersichtlich ist, wird ein erfindungsgemäßes Faserverbundwerkstoffprofil 4 im dargestellten Ausführungsbeispiel als vorderer seitlicher Scheibenrahmen 2 bzw. als A-Säule für ein Kraftfahrzeug 1 verwendet, das beispielhaft als Cabriolet ausgeführt ist. Das Faserverbundwerkstoffprofil 4 ist im dargestellten Ausführungsbeispiel als geschlossenes Hohlprofil ausgeführt und so dimensioniert, dass es eine ausreichende Bruchdehnung aufweist, um im Falle eines Überschlags bei einem Unfall die entstehenden Kräfte F ohne Versagen der Struktur, d.h. ohne Bruch, aufzunehmen bzw. an eine untere Karosseriestruktur 3 weiterzuleiten.

Wie aus Fig. 2 ersichtlich ist, ist das Faserverbundwerkstoffprofil 4 für den Scheibenrahmen 2 eines Kraftfahrzeugs 1 an einer Seite in einem mittleren Bereich 4.1 konkav ausgebildet. Die beiden im Querschnitt zu dem konkaven Bereich 4.1 benachbarten konvexen Bereiche 4.2, 4.3 des Faserverbundwerkstoffprofils 4 sind im Vergleich zum konkaven Bereich 4.1 schubweich ausgebildet, d.h. die Fasern in den konvexen schubweichen Bereichen 4.2, 4.3 weisen einen Orientierungswinkel von ungefähr 0° auf. Durch eine derartige Ausführung des Faserverbundwerkstoffprofils 4 wird erreicht, dass im Falle einer Überlast in den schubweichen Bereichen 4.2, 4.3 ein Riss ausgebildet wird, der bei weiter steigender Kraft durch das Faserverbundwerkstoffprofil 4 wandert. Somit wird das Faserverbundwerkstoffprofil 4 in zwei Halbschalen aufgeteilt, wobei eine innere Halbschale eine äußere Halbschale abstützt und somit ein weiterer Anstieg des Kraftniveaus erreicht werden kann. Zudem kann durch die Aufteilung in zwei Halbschalen ein maximaler senkrechter Faserabstand verringert und dadurch eine größere mögliche Gesamtdurchsenkung des Faserverbundwerkstoffprofils 4 erzielt werden.

Durch das erfindungsgemäße Faserverbundwerkstoffprofil 4 kann bei dessen Verwendung als Scheibenrahmen die Widerstandsfähigkeit des Fahrzeugdaches gegen Eindrückung erhöht werden, so dass bei Crashtests ohne Versagen der Struktur vergleichbare Werte wie bei der Verwendung von Stahl und/oder Aluminium als Werkstoff für den Scheibenrahmen erzielt werden können.

Somit kann durch den Einsatz des erfindungsgemäßen Faserverbundwerkstoffprofils als Scheibenrahmen für ein Kraftfahrzeug das Fahrzeuggewicht in vorteilhafter Weise bei gleich bleibendem hohen Insassenschutz weiter verringert werden. Das geringere Fahrzeuggewicht ergibt einen tieferen Fahrzeugschwerpunkt und ermöglicht eine Verbesserung des Fahrverhaltens. Zudem kann der Schreibenrahmen bzw. die A-Säule durch die Verwendung des erfindungsgemäßen Faserverbundwerkstoffprofils dünner ausgeführt werden, wodurch der Sichtwinkel in vorteilhafter Weise verbessert wird.

### BEZUGSZEICHENLISTE

- 1: Kraftfahrzeug
- 2: Scheibenrahmen
- 3: untere Karosseriestruktur
- 4: Faserverbundwerkstoffprofil
- 4.1: konkaver Bereich
- 4.2: benachbarter Bereich
- 4.3: benachbarter Bereich
- F: Kraftwirkung

## Patentansprüche

1. Faserverbundwerkstoffprofil, insbesondere für einen Scheibenrahmen (2) eines Kraftfahrzeugs (1), **dadurch gekennzeichnet, dass** das Faserverbundwerkstoffprofil (4) an einer Seite konkav ausgebildet ist, wobei mindestens ein im Querschnitt zu dem konkaven Bereich (4.1) benachbarter Bereich (4.2,4.3) des Faserverbundwerkstoffprofils (4) schubweich ausgebildet ist, so dass das Faserverbundwerkstoffprofil (4) bei einer Krafteinwirkung (F) in diesem mindestens einen benachbarten schubweichen Bereich (4.2, 4.3) einen Riss ausbildet, der das Faserverbundwerkstoffprofil (4) zur Erhöhung der Bruchdehnung in zwei Halbschalen aufteilt, wobei eine entstehende innere Halbschale eine äußere Halbschale abstützt.

2. Faserverbundwerkstoffprofil nach Anspruch 1, **dadurch gekennzeichnet, dass** die Fasern in dem mindestens einen schubweichen Bereich (4.2, 4.3) einen Orientierungswinkel von ungefähr 0° aufweisen.

3. Faserverbundwerkstoffprofil nach Anspruch 1 oder 2, **dadurch gekennzeichnet, dass** zwei zum konkaven Bereich (4.1) benachbarte schubweiche Bereiche (4.2, 4.3) konvex ausgebildet sind.

4. Faserverbundwerkstoffprofil nach einem der Ansprüche 1 bis 3, **dadurch gekennzeichnet, dass** das Faserverbundwerkstoffprofil (4) als geschlossenes Hohlprofil ausgebildet ist.

5. Scheibenrahmen für ein Kraftfahrzeug, **dadurch gekennzeichnet, dass** der Scheibenrahmen (2) mindestens ein Faserverbundwerkstoffprofil (4) nach einem der Ansprüche 1 bis 4 umfasst.

6. Scheibenrahmen nach Anspruch 5, **dadurch gekennzeichnet, dass** das mindestens eine Faserverbundwerkstoffprofil (4) so ausgerichtet ist, dass es eine maximale Bruchdehnung gegen eine zu erwartende Krafteinwirkung (F) aufweist.

## Claims

1. Fibre composite profile, in particular for a windscreen frame (2) of a motor vehicle (1), **characterized in that** the fibre composite profile (4) is concavely formed on one side, at least one region (4.2, 4.3) of the fibre composite profile (4) that is adjacent to the concave region (4.1) in cross section being formed as not resistant to shear, so that, under the action of a force (F) in this at least one adjacent non-shear-resistant region (4.2, 4.3), the fibre composite profile (4) forms a crack that divides the fibre composite profile (4) into two half shells to increase the elongation at break, an inner half shell thereby produced supporting an outer half shell.

2. Fibre composite profile according to Claim 1,
**characterized in that** the fibres in the at least one non-shear-resistant region (4.2, 4.3) having an angle of orientation of approximately 0°.

3. Fibre composite profile according to Claim 1 or 2, **characterized in that** two non-shear-resistant regions (4.2, 4.3) adjacent to the concave region (4.1) are convexly formed.

4. Fibre composite profile according to one of Claims 1 to 3, **characterized in that** the fibre composite profile (4) is formed as a closed hollow profile.

5. Windscreen frame for a motor vehicle, **characterized in that** the windscreen frame (2) comprises at least one fibre composite profile (4) according to one of Claims 1 to 4.

6. Windscreen frame according to Claim 5, **characterized in that** the at least one fibre composite profile (4) is aligned in such a way that it has a maximum elongation at break under the action of an expected force (F).

## Revendications

1. Profilé en matériau composite renforcé par des fibres, notamment pour un cadre de vitre (2) d'un véhicule automobile (1), **caractérisé en ce que** le profilé en matériau composite renforcé par des fibres (4) est réalisé sous forme concave d'un côté, au moins une région (4.2, 4.3) du profilé en matériau composite renforcé par des fibres (4) adjacente à la région concave (4.1) en coupe transversale étant réalisée de manière non rigide en poussée, de sorte que le profilé en matériau composite renforcé par des fibres (4), dans le cas d'une application de force (F) dans cette au moins une région adjacente non rigide en poussée (4.2, 4.3) produise une fissure qui divise le profilé en matériau composite renforcé par des fibres (4) en deux demi-coques pour augmenter l'étirement à la rupture, une demi-coque intérieure ainsi formée supportant une demi-coque extérieure.

2. Profilé en matériau composite renforcé par des fibres selon la revendication 1, **caractérisé en ce que** les fibres dans l'au moins une région non rigide en poussée (4.2, 4.3) présentent un angle d'orientation d'environ 0°.

3. Profilé en matériau composite renforcé par des fibres selon la revendication 1 ou 2, **caractérisé en ce que** deux régions non rigides en poussée (4.2, 4.3) adjacentes à la région concave (4.1) sont réalisées de façon convexe.

4. Profilé en matériau composite renforcé par des fibres selon l'une quelconque des revendications 1 à 3, **caractérisé en ce que** le profilé en matériau composite renforcé par des fibres (4) est réalisé sous forme de profilé creux fermé.

5. Cadre de vitre pour un véhicule automobile, **caractérisé en ce que** le cadre de vitre (2) comprend au moins un profilé en matériau composite renforcé par des fibres (4) selon l'une quelconque des revendications 1 à 4.

6. Cadre de vitre selon la revendication 5, **caractérisé en ce que** l'au moins un profilé en matériau composite renforcé par des fibres (4) est orienté de telle sorte qu'il présente un étirement à la rupture maximum sous l'effet de l'application d'une force (F) prévisible.
